# EUROPÄISCHE PATENTSCHRIFT

(11) **EP 0 753 700 B1**
(45) Veröffentlichungstag und Bekanntmachung des Hinweises auf die Patenterteilung: **01.12.1999**
(21) Anmeldenummer: 96250145.8
(22) Anmeldetag: 03.07.1996
(51) Int. Cl.: F17C 1/16

(54) **Composite-Druckbehälter zur Speicherung von gasförmigen Medien unter Druck mit einem Liner aus Kunststoff und Verfahren zu dessen Herstellung**
Composite pressure vessel with a plastic liner for the storage of pressurized gaseous fluids and method for its production
Récipient de pression en matériau composite pour le stockage de fluides gazeux sous pression pourvu d'un revêtement en matière plastique et méthode pour la construction du récipient

(30) Priorität: 10.07.1995 DE 19526154
(43) Veröffentlichungstag der Anmeldung: 15.01.1997
(73) Patentinhaber: MANNESMANN Aktiengesellschaft, 40213 Düsseldorf (DE)
(72) Erfinder: Lange, Klaus, Dipl.-Ing., 47058 Duisburg (DE); Heisterkamp, Dieter, Dipl.-Ing., 46535 Dinslaken (DE); Rasche, Christian, Dr.-Ing., 44892 Bochum (DE)
(74) Vertreter: Meissner, Peter E., Dipl.-Ing.

(56) Entgegenhaltungen:
- EP-A- 0 550 951
- DE-A- 2 149 962
- FR-A- 2 280 856
- FR-A- 2 600 750
- US-A- 5 287 988

## Beschreibung

Die Erfindung betrifft einen Composite-Druckbehälter zur Speicherung von gasförmigen Medien unter Druck mit einem Liner aus Kunststoff und zwei im Halsbereich liegenden Öffnungen gemäß dem Gattungsbegriff des Hauptanspruches.

Ein gattungsbildender Composite-Behälter zur Speicherung von gasförmigen Medien unter Druck ist in der DE 69007165 T2 offenbart. Dieser weist einen Liner aus Kunststoff und zwei im Halsbereich liegende Öffnungen auf. In den Öffnungen ist ein verschließendes und / oder abdichtendes Halsstück angeordnet, von denen mindestens eines zur Aufnahme eines einschraubbaren Ventils ausgebildet ist. Beide Halsstücke sind in dem dem Druckbehälter zugewandten Endbereich mit einem flachverlaufenden kegelstumpfartigen Kragen versehen, wobei der Kragen innenseitig vom Liner und außenseitig von der verstärkenden Wicklung umgeben ist. Darüber hinaus weisen beide Halsstücke eine die Mittelachse als Symmetrieachse einschließende und von der Innenseite des Behälters her sich erstreckende Ausnehmung auf. In diese Ausnehmung erstreckt sich ein als Hals ausgebildeter Bereich des Liners und kommt dort zur Anlage. Im Falle des Ventil-Halsstückes geht die Ausnehmung in die Bohrung des Ventileinschraubbereiches über. Nachteilig bei dieser Konstruktion ist, daß sowohl bei thermischen als auch bei mechanischen Lastwechseln sich der Liner vom Halsstück lösen kann, was im Falle des Ventil-Halsstückes zu erhöhten Permeationsraten führt.

Aus der US-PS 3,508,677 ist ein etwas anders konstruierter Composite-Druckbehälter zur Speicherung von gasförmigen Medien unter Druck bekannt. Dieser Druckbehälter weist einen Liner aus Kunststoff auf, der mit einer Faserwicklung verstärkt wird. Der Halsbereich ist mit je einer Öffnung versehen, in der ein die Öffnung verschließendes und/oder abdichtendes Halsstück angeordnet ist. Das eine Halsstück ist so ausgebildet, daß es einschraubbares Ventil aufnehmen kann. Zur Verankerung des Halsstückes mit dem Behälter weist dieses in dem dem Behälter zugewandten Endbereich einen flachverlaufenden, kegelstumpfartigen Kragen auf. Der Kragen ist von Elementen des Liner und/oder der verstärkenden Wicklung umgeben. Von der Innenseite her erstreckt sich in das Halsstück eine die Mittelachse als Symmetrieachse einschließende Ausnehmung, die im Falle des Ventil-Halsstückes in die Bohrung des Ventileinschraubbereiches übergeht. Nachteilig bei dieser Konstruktion ist, daß der Kragen sehr scharfkantig ausgebildet ist und dadurch in den Ecken hohe Spannungsspitzen entstehen, die bei entsprechender Belastung zu Undichtigkeiten führen können. Darüber hinaus ist eine Anbindung sei es chemisch oder physikalisch der Metall-Halsstücke an den Linerwerkstoff nicht zu erkennen. Dies führt sowohl bei thermischen als auch bei mechanischen Lastwechseln zu einer raschen Ablösung der Halsstücke von dem Polymer-Liner, was zu erhöhten Permeationsraten und zu einer unzureichenden Verdrehsicherung des Halsstückes führt. Dabei ist zu berücksichtigen, daß je nach Abmessung das aufzubringende Ventildrehmoment bei einigen hundert Nm liegt.

Eine etwas andere Konstruktion des Halsstückes zeigt die EP 0550951 A1. Hier ist der Kragen sorgfältig abgerundet und auch die Übergänge in den Körper des Halsstückes. Damit der Liner weitgehend formschlüssig mit dem Halsstück verbindbar ist, sind in dem Kragenbereich mindestens auf der Unterseite meistens auch auf der Oberseite wenigstens eine ringförmige Ausnehmung vorgesehen. Dies verteuert die Herstellung des Halsstückes und erschwert die Montage. Bei einer weiteren Ausführungsform ist auf der Innenseite des Halsstückes ein in die Ausnehmung des Kragens einrastender tulpenartiger Einsatz vorgesehen, der von oben her durch ein einschraubbares kegelstumpfartiges Element verspannt wird. Durch diese Konstruktion wird zwar die Abdichtung verbessert, sie ist aber sehr aufwendig und beansprucht eine Vielzahl von Einzelteilen, die gesondert hergestellt werden müssen.

Schließlich sei noch auf die US 5287988 verwiesen aus der ein Composite- Druckbehälter bekannt ist, der zwei Halsstücke aufweist, von denen eines zur Aufnahme eines einschraubbaren Ventils dient. Beide Halsstücke sind im dem Druckbehälter zugewandten Endbereich mit einem flachverlaufenden, kegelstumpfartigen Kragen versehen, bei dem die Basis des Kegels dem Behälterinnenraum zugewandt ist.

Aufgabe der Erfindung ist es, einen gattungsmäßigen Composite-Druckbehälter zur Speicherung von gasförmigen Medien unter Druck mit einem Liner aus Kunststoff anzugeben, der bei einer einfachen und kostengünstigen Anbindung der unabhängig ob aus Metall oder Kunststoff gefertigten Halsstücke an die Behälterdome des Kunststoffkernbehälters eine hohe Abdichtung auch unter kombinierter wechselnder mechanischer und thermischer Belastung aufweist.

Diese Aufgabe wird mit den im kennzeichnenden Teil des Anspruches 1 angegebenen Merkmalen gelöst. Vorteilhafte Weiterbildungen sowie ein Verfahren zur Herstellung eines solchen Behälters ist Bestandteil von Unteransprüchen.

Im Unterschied zum bekannten Stand der Technik ist der Kragen innenseitig nur vom Liner und außenseitig nur von Elementen der verstärkenden Wicklung umgeben. Damit es im kritischen Übergangsbereich vom Liner in den Bohrungsbereich der Öffnung zu keinen Undichtigkeiten kommen kann, weist der Liner einen als Hals ausgebildeten Bereich aus. Die Verbindung zwischen Halsstück und Druckbehälter erfolgt in der Weise, daß mittels eines auf den Hals des Liners und in die Ausnehmung des Halsstückes eingearbeiteten Gewindes das Halsstück auf den Liner aufgeschraubt wird, bevor die verstärkende Wicklung auf den Liner aufgebracht wird. Die Dämpfungsscheibe auf der Unterseite des Kragens des Halsstückes soll neben einer zusätzlichen Abdichtung vor allem Spannungsspitzen infolge mechanischer Wechselbeanspruchung minimieren. Das Halsstück kann je nach Anwendungsfall z.B. aus Kunststoff, wie PPS (Polyphenylensulfid) oder aus Edelstahl z. B. 18/8 Chromnickelstahl oder aus Leichtmetall z. B. Al Legierung 6061 hergestellt sein.

Zur Verstärkung der Dichtung wird weiterbildend vorgeschlagen, zwischen der Stirnfläche des Halsabschnittes des Liners und der damit zusammenwirkenden Anschlagfläche des Halsstückes einen Dichtungsring, vorzugsweise einen O-Ring anzuordnen. Die vorgeschlagene Schräge von vorzugsweise 3° an der Unterseite des Kragens und der damit zusammenwirkenden Dichtscheibe verbessert die Anpreßverhältnisse bei Aufbringung der Vorspannung des Halsstückes. Die Vorspannung hat den Vorteil, daß unter Innendruckbeanspruchung die Dichtigkeit und das Lastwechselverhalten infolge minimierter Spannungsspitzen erhöht wird und bei thermischen Lastwechseln die maximale Spannungsamplitude ohne Vorspannung der Halsstücke nicht erreicht werden kann, da die infolge der Vorspannung der Halsstücke eingebrachten Druckspannungen zuvor in Zugspannungen konvertiert werden müssen. Unterstützend in diesem Sinne ist vorgesehen sowohl die Dichtscheibe als auch den Dichtring aus einem Material herzustellen, das einen geringen E-Modul und eine hohe Dehnung aufweist. Die Verklammerung zwischen Halsstück und verstärkender Wicklung einerseits und der Dichtscheibe andererseits kann verstärkt werden, wenn die Ober- und Unterseite des Kragens eine Mindestrauheit Ra von z. B. 12,5 pm aufweist. Dies führt zu einer Mikroverzahnung zwischen dem Kragen des Halsstückes und den ihn umgebenden Material.

Die vorgeschlagene Konstruktion ist einfach herstellbar und besteht nur aus wenigen Teilen. Durch das Aufschrauben der Halsstücke wird ohne Probleme eine dichte Verbindung zwischen Liner und Halsstück geschaffen. Die Anordnung einer Dichtscheibe und eines Dichtringes in den kritischen Bereichen gewährleistet eine hohe Abdichtung auch unter wechselnden mechanischen und thermischen Lasten.

In der Zeichnung wird anhand eines Ausführungsbeispieles die erfindungsgemäße Vorrichtung näher erläutert.

Es zeigen:
- Figur 1: im Längsschnitt einen erfindungsgemäßen Composite-Druckbehälter
- Figur 2: im Längsschnitt den Kunststoff-Liner
- Figur 3: im vergrößerten Maßstab der Anschlußbereich für das Ventil des Composite-Druckbehälters
- Figur 4: im Längsschnitt das Ventil-Halsstück
- Figur 5: im Längsschnitt das Verschluß-Halsstück
- Figur 6: eine halbseitige Draufsicht der Darstellung in Figur 5

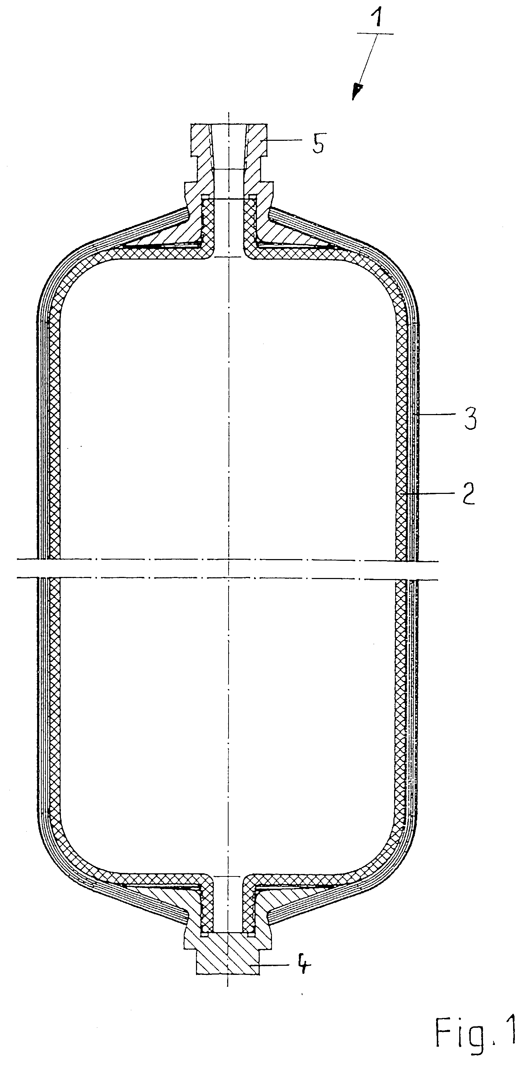

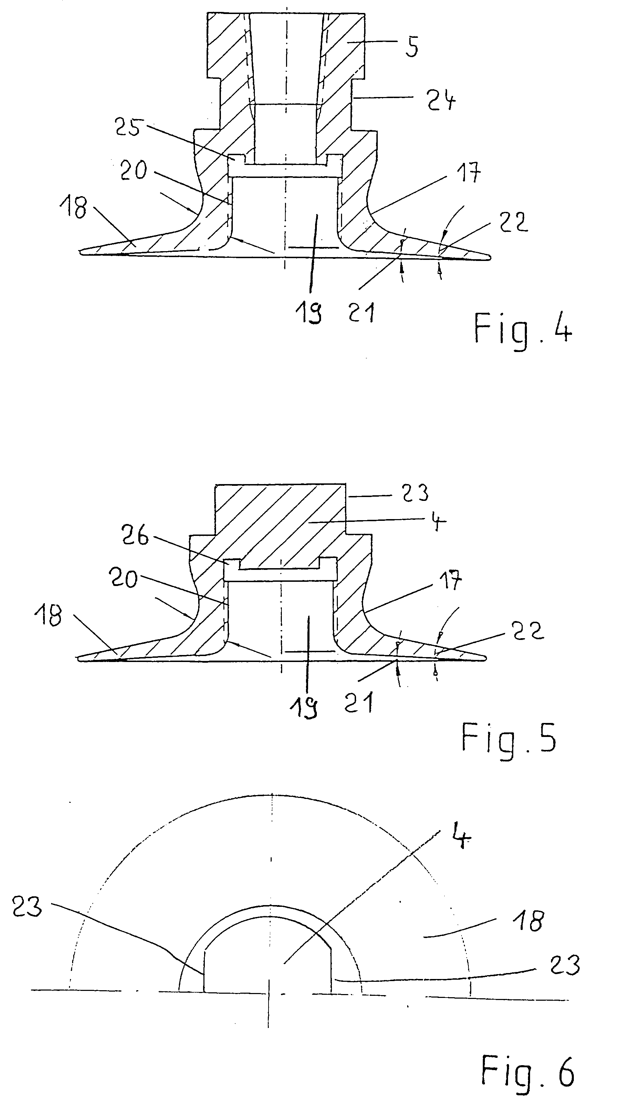

In Figur 1 ist im Längsschnitt ein erfindungsgemäßer Composite-Druckbehälter 1 dargestellt. Er besteht aus einem über Blasform oder Rotationsverfahren oder Thermoformverfahren hergestellten Kunststoff-Liner 2, der durch eine von außen aufgewickelte Faserwicklung 3 verstärkt wird. Beispielsweise besteht die verstärkende Umwicklung aus einer Faserverstärkung wie z. B. Kohlenstoff-, Aramid-, Glas-, Bor-, Al₂O₃-Fasern oder Gemischen (Hybridgarne) hieraus, die in einer Matrix aus Duromeren, z. B. Epoxid- oder Phenolharzen etc. oder in Thermoplasten, z. B. PA 12, PA 6, PP etc. eingebettet sind. Der Faserverbundwerkstoff, bestehend aus o. g. Fasern und Polymeren, wird sowohl in axialer als auch tangentialer Richtung des-Behälters aufgebracht, d. h. der Faserverstärkungskörper (FVK) bzw. die Ausrichtung der Faserlängsachsen weisen im Fall der axialen Umwicklung im zylindrischen Behälterteil nur einen kleinen Winkel (0° bis 25°) gegenüber der Behälterlängsachse auf. Mit Hilfe der axialen Bewicklung werden auch die Polkappen des Kunststoff-Liners gleichmäßig bewickelt. Vorher, alternierend oder nach dieser Polkappenwicklung erfolgt die Ablage des FVK's ausschließlich tangential bzw. in Umfangsrichtung des zylindrischen Behälterteils sowohl aus axialen als auch tangentialen Umwicklungsanteilen bestehend, um die Polkappen jedoch nur eine Umwicklung in axialer Richtung erfolgt. Die Wanddickenanteile von tangentialer Umwicklung und axialer Umwicklung hängen ab vom Außendurchmesser des KS-Liners 2, von der Festigkeit des FVK's, von den Wickelwinkeln etc..Der Composite-Druckbehälter 1 weist im Halsbereich Öffnungen auf, die mit je einem Halsstück 4,5 verschlossen und/oder abgedichtet sind. Einzelheiten der Halsstücke 4,5 werden in den Figuren 4 und 5 näher erläutert.

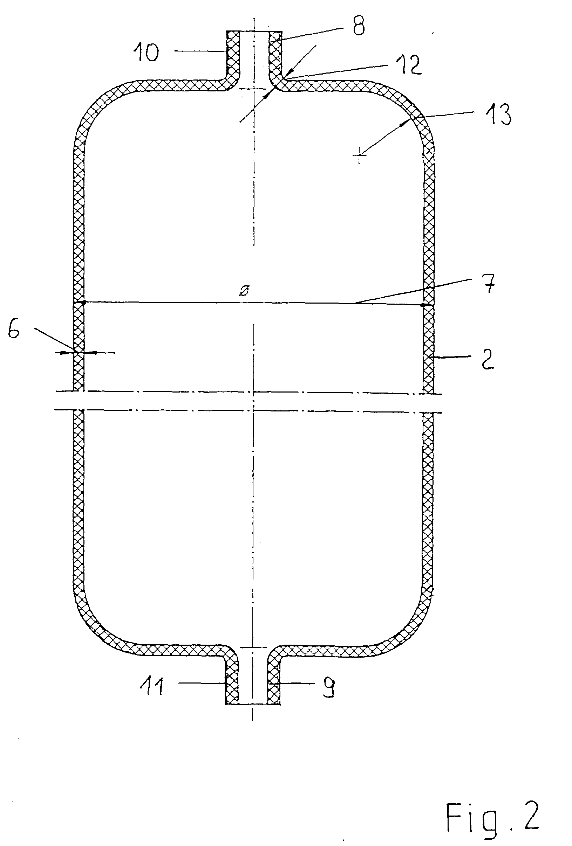

Figur 2 zeigt im Längsschnitt den Kunststoff-Liner 2. Seine Maße sind im wesentlichen durch die Dicke 6 und den äußeren Durchmesser 7 festgelegt. Erfindungsgemäß weist dieser Liner 2 zwei Bereiche auf, die als Hals 8,9 ausgebildet sind. Zum Aufschrauben der Halsstücke 4,5 ist der jeweilige Hals 8,9 des Liners 2 mit einem Gewindeabschnitt 10,11 versehen. Vorzugsweise ist das Gewinde ein Sägezahngewinde, z. B. KS 25 Steigung 4 gemäß DIN 6063 Teil 1 und Teil 2. Die Abrundung des Liners 2 in den Übergangsbereichen ist durch entsprechende Radien 12,13 gekennzeichnet.

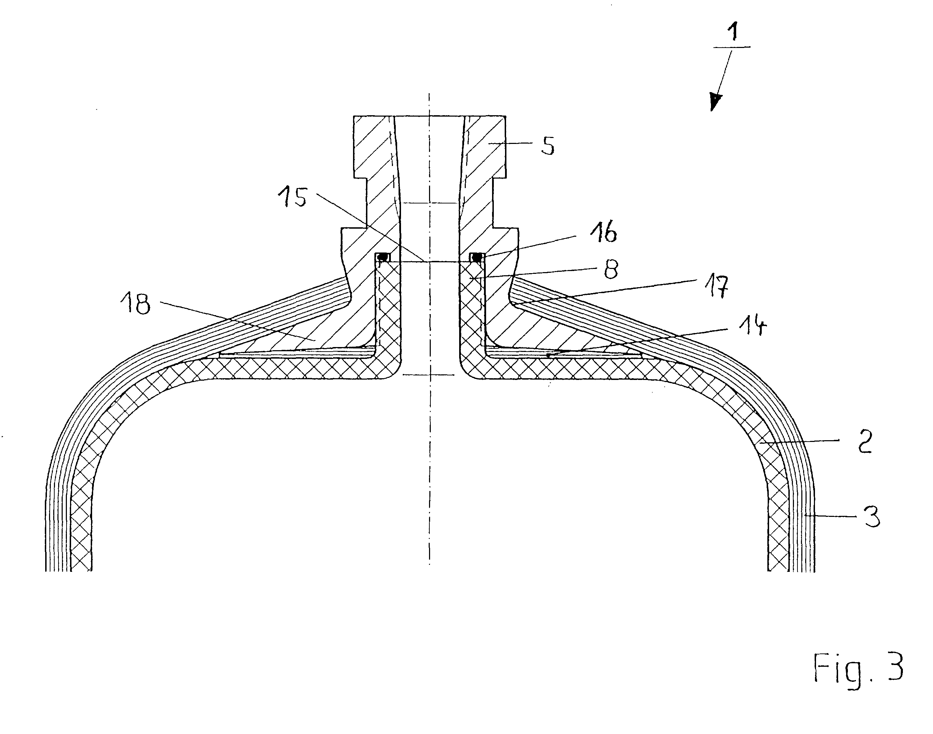

Figur 3 zeigt in einem vergrößerten Maßstab den Halsbereich des Composite-Druckbehälters 1 auf der Ventilseite. Erfindungsgemäß ist zwischen Halsstück 5 und Liner 2 eine Dichtscheibe 14 angeordnet und auf der Stirnseite 15 des Halses 8 des Liners 2 ein Dichtring 16, vorzugsweise ein O-Ring. Durch die bereits bekannte Hohlkehle 17 im Übergangsbereich vom Körper des Halsstückes 5 in den Kragen 18 des Halsstückes 5 erhalten die Halsstücke 4,5 durch die verstärkende Wicklung 3 eine Abstützung. Die Einzelheiten der Halsstücke 4,5 sind im Längsschnitt in den Figuren 4,5 dargestellt. Beide Halsstücke 4,5 weisen einen Kragen 18, eine Hohlkehle 17 sowie eine nach innen sich erstreckende Ausnehmung 19 auf. Diese Ausnehmung 19 ist mit einem Gewindeabschnitt 20 versehen, der mit dem Gewindeabschnitt 10,11 der Hälse 8,9 des Liners 2 zusammenwirkt. Vorzugsweise ist das Gewinde ebenfalls ein Sägezahngewinde z. B. KS 25 gemäß DIN 6063 Teil 1 und Teil 2. Zur Vermeidung der Entstehung von Spannungsspitzen sind alle Kanten und Übergänge der Halsstücke 4,5 sorgfältig abgerundet. Erfindungsgemäß weist der Kragen 18 auf der Unterseite eine Schräge 21 auf, die beispielsweise 3° beträgt. Die Schräge 22 des Kragens 18 selbst soll beispielsweise 12° betragen. Zur besseren Handhabung der Halsstücke 4,5 und zur Drehsicherung weisen diese einen außerhalb des Composite-Druckbehälters 1 liegenden Abschnitt auf, der mit einem Schlüssel-Ansatz 23,24 versehen ist. Sowohl die Ober- als auch die Unterseite des Kragens 18 weisen eine relativ rauhe Oberfläche z. B. N 10, Ra 12,5 auf, um eine Mikroverzahnmung mit dem Matrixmaterial des FVK bzw. mit der Oberfläche der Dichtscheibe 14 sicherzustellen. Zur Aufnahme des Dichtringes 16 (Fig. 3) sind beide Halsstücke 4,5 am Ende des Gewindeabschnittes 20 mit einer eingedrehten Nut 25,26 versehen.

## Patentansprüche

1. Composite-Druckbehälter zur Speicherung von gasförmigen Medien unter Druck mit einem Liner (2) aus Kunststoff und zwei an entgegengesetzten Enden des Druckbehälters ausgebildeten Halsbereichen (8, 9) und darin befindlichen Öffnungen, in denen je ein die Öffnung verschließendes und/oder abdichtendes Halsstück (4, 5) angeordnet ist, von denen mindestens eines zur Aufnahme eines einschraubbaren Ventils ausgebildet ist und beide Halsstücke im dem Druckbehälter zugewandten Endbereich mit einem flachverlaufenden, kegelstumpfartigen Kragen (18) versehen sind, bei dem die Basis des Kegels der Behälterinnenseite zugewandt ist, der innenseitig vom Liner (2) und außenseitig von der verstärkenden Wicklung (3) umgeben ist sowie mit einer die Mittelachse als Symmetrieachse einschließenden und von der Innenseite des Druckbehälters her sich erstreckenden Ausnehmung (19), die in einen als Hals ausgebildeten Bereich des Liners sich erstreckt und zur Anlage kommt und die im Falle des Ventil-Halsstückes in die Bohrung des Ventileinschraubbereiches übergeht,
dadurch gekennzeichnet,
daß die Ausnehmung (19) einen Innengewindeabschnitt (20) aufweist, der mit einem auf dem als Hals (8, 9) ausgebildeten Bereich des Liner (2) angeordneten Außengewindeabschnitt (10, 11) zusammenwirkt und daß zwischen der Außenfläche des Liners (2) und der Innenseite des Kragens (18) des Halsstückes (4, 5) eine Dichtscheibe (14) und zwischen der Stirnfläche (15) des Halsabschnittes (8, 9) des Liners (2) und der damit zusammenwirkenden Anschlagfläche des Halsstückes (4, 5) in einer eingedrehten Nut (25, 26) des jeweiligen Halsstückes (4,5) ein Dichtring (1 6) angeordnet ist.

2. Composite-Druckbehälter nach Anspruch 1,
dadurch gekennzeichnet,
daß die Innenseite des Kragens (18) eine zur Mittelachse ansteigenden Schräge (21) aufweist und die damit zusammenwirkende Außenseite der Dichtscheibe (14) entsprechend angeschrägt ist.

3. Composite-Druckbehälter nach Anspruch 2, dadurch gekennzeichnet,
daß der Winkel der Schräge (21) 3° beträgt.

4. Composite-Druckbehälter nach einem der Ansprüche 1 bis 3,
dadurch gekennzeichnet,
daß die Außen- und Innenseite des Kragens eine Mindestrauheit Ra von 12,5 µm aufweist.

5. Composite-Druckbehälter nach einem der Ansprüche 1 bis 4,
dadurch gekennzeichnet,
daß der Gewindeabschnitt (20) der Ausnehmung (19) sowie der Gewindeabschnitt (10, 11) des Halses (8, 9) des Liners (2) ein Sägezahngewinde aufweist.

6. Composite-Druckbehälter nach einem der Ansprüche 1 bis 5,
dadurch gekennzeichnet,
daß die Dichtscheibe (14) und der Dichtring (16) aus einem Material hergestellt sind, das einen geringen E-Modul und eine hohe Dehnung aufweist.

7. Verfahren zur Herstellung eines Composite-Druckbehälters nach Anspruch 1,
dadurch gekennzeichnet,
daß an den Kunststoff-Liner (2) zwei zylindrische Halsbereiche (8, 9) angeformt und diese mit einem Außengewindeabschnitt (10, 11) versehen werden und nach Auflegen der Dichtscheibe (14) und des Dichtringes (16) das jeweilige Halsstück (4, 5) unter einer definierten Vorspannung mit dem Liner (2) verbunden wird und nach dem Aufspannen auf eine entsprechende Drehvorrichtung der Kunststoff-Liner (2) in bekannter Weise mit einer verstärkenden Wicklung (3) versehen wird.

## Claims

1. A composite pressure vessel for storing gaseous media under pressure, comprising a liner (2) of plastics material and two neck regions (8, 9) formed at opposite ends of the pressure vessel and openings formed therein, in each of which there is arranged a neck piece (4, 5) which closes and/or seals the opening, of which at least one is designed to receive a valve which can be screwed in and both neck pieces are provided in the end region facing the pressure vessel with a flat, frustoconical collar (18), in which the base of the cone faces the inside of the container, which is surrounded on the inside by the liner (2) and on the outside by the reinforcing winding (3) and also with a recess (19) enclosing the centre axis as an axis of symmetry and extending from the inside of the pressure vessel, which recess extends into and comes to lie on a region of the liner which is formed as a neck and which in the case of the valve neck piece merges into the bore of the region of screwing-in of the valve,
characterised in that
the recess (19) has an internal threaded section (20) which cooperates with an external threaded section (10, 11) located on the region of the liner (2) which is designed as a neck (8, 9), and that a sealing disc (14) is arranged between the outer surface of the liner (2) and the inside of the collar (18) of the neck piece (4, 5) and a sealing ring (16) is arranged between the end face (15) of the neck section (8, 9) of the liner (2) and the stop face of the neck piece (4, 5) which cooperates therewith in a turned groove (25, 26) formed in the respective neck piece (4, 5).

2. A composite pressure vessel according to Claim 1, characterised in that the inside of the collar (18) has an incline (21) which rises towards the central axis and the outside of the sealing disc (14) which cooperates therewith is correspondingly bevelled.

3. A composite pressure vessel according to Claim 2, characterised in that the angle of the incline (21) is 3°.

4. A composite pressure vessel according to one of Claims 1 to 3, characterised in that the outside and inside of the collar have a minimum roughness Ra of 12.5 µm.

5. A composite pressure vessel according to one of Claims 1 to 4, characterised in that the threaded section (20) of the recess (19) and the threaded section (10, 11) of the neck (8, 9) of the liner (2) have a buttress thread.

6. A composite pressure vessel according to one of Claims 1 to 5, characterised in that the sealing disc (14) and the sealing ring (16) are made from a material which has a low elasticity modulus and a high elongation.

7. A process for producing a composite pressure vessel according to Claim 1, characterised in that two cylindrical neck regions (8, 9) are formed on the plastics liner (2) and these are provided with an external threaded section (10, 11) and once the sealing disc (14) and the sealing ring (16) have been placed on the respective neck section (4, 5) is connected to the liner (2) under a defined initial tension and once it has been clamped on to a corresponding turning device the plastics liner (2) is provided in known manner with a reinforcing winding (3).

## Revendications

1. Réservoir composite sous pression, pour stocker des fluides gazeux sous pression, comportant un fourreau en matière synthétique et deux zones de col (8,9) prévues à des extrémités opposées du réservoir sous pression et des ouvertures qui s'y trouvent, dans lesquelles est agencée à chaque fois une pièce de col (4,5) fermant et/ou rendant étanche l'ouverture, desquelles au moins l'une est réalisée pour recevoir une soupape pouvant être vissée, et les deux pièces de col étant munies dans la zone d'extrémité en regard du récipient sous pression d'une collerette (18) s'étendant de façon plane et tronconique, pour laquelle la base du cône est en regard de la face interne du réservoir, qui est entouré sur la face interne par le fourreau (2) et sur la face externe par l'enroulement de renforcement (3), ainsi qu'un évidement (19) comprenant l'axe central comme axe de symétrie et s'étendant à partir de la face interne du récipient sous pression, qui s'étend dans une zone du fourreau réalisée sous forme de col et arrive au contact et qui passe, dans le cas de la pièce de col à soupape, dans le perçage de la zone de vissage de la soupape,
caractérisé en ce que l'ouverture (19) présente un tronçon fileté interne (20) qui coopère avec un tronçon fileté externe (10,11) prévu dans la zone du fourreau (2), réalisée sous forme de col (8,9), et en ce que, entre la face externe du fourreau (2) et la face interne de la collerette (18) de la pièce à col (4,5), est agencé un disque d'étanchéité (14), et entre la face frontale (15) du tronçon de col (8,9) du fourreau (2) et la face de butée coopérant avec celle-ci de la pièce de col (4,5), dans une gorge (25,26) à vis de la pièce de col correspondante (4,5), est agencée une bague d'étanchéité (16).

2. Réservoir composite sous pression selon la revendication 1,
caractérisé en ce que la face interne de la collerette (18) présente un biseau (21) montant vers l'axe central et la face externe du disque d'étanchéité (14) qui coopère avec celle-ci est biseautée en correspondance.

3. Réservoir composite sous pression selon la revendication 2,
caractérisé en ce que l'angle du biseau (21) vaut 3°.

4. Réservoir composite sous pression selon l'une des revendications 1 à 3,
caractérisé en ce que les faces externe et interne de la collerette présentent une rugosité minimale Ra de 12,5 µm.

5. Réservoir composite sous pression selon l'une des revendications 1 à 4,
caractérisé en ce que le tronçon fileté (20) de l'évidement (19), ainsi que le tronçon fileté (10,11) du col (8,9) du fourreau (2), présentent un filet en dents de scie.

6. Réservoir composite sous pression selon l'une des revendications 1 à 5,
caractérisé en ce que le disque d'étanchéité (14) et la bague d'étanchéité (16) sont réalisés en un matériau qui présente un coefficient d'élasticité réduit et une dilatation élevée.

7. Procédé pour réaliser un réservoir composite sous pression selon la revendication 1,
caractérisé en ce que l'on forme sur le fourreau (2) en matière synthétique deux zones de col (8,9) cylindriques et ces dernières sont munies d'un tronçon fileté externe (10,11), et après la mise en place du disque d'étanchéité (14) et de la bague d'étanchéité (16), la pièce de col (4,5) correspondante est reliée, sous une prétension définie, au fourreau (2), et après le montage sur un dispositif rotatif correspondant, le fourreau (2) en matière synthétique est muni, de façon connue, d'un enroulement de renforcement (3).
